# EUROPEAN PATENT APPLICATION

(11) **EP 0 748 019 A1**
(43) Date of publication of application: **11.12.1996**
(21) Application number: 96109208.7
(22) Date of filing: 07.06.1996
(51) Int. Cl.: H02G 1/12

(54) **Method for processing an end of a shielded cable**

(30) Priority: 07.06.1995 JP 140819/95
(71) Applicant: SUMITOMO WIRING SYSTEMS, LTD., Yokkaichi City Mie 510 (JP)
(72) Inventor: Watanabe, Kunihiko, Sumitomo Wiring Syst.Ltd., Yokkaichi-City, Mie 510 (JP)
(74) Representative: Müller-Boré & Partner Patentanwälte

(57) **Abstract**

The invention is designed to process a shielded cable using a pressurized air with simple equipments, thereby ensuring an easy automatic processing.

Drain wires 1b of a shielded cable 1 are exposed and expanded into a rough shape of a ball. A pressurized air is applied to the expanded drain wires 1b. Simultaneously, cores 1a covered by the drain wires 1b are bent in a direction opposite from a flow of the pressurized air. As a result, the cores 1a are bent to project toward an upstream side of the flow of the pressurized air, whereas the drain wires 1b are bent to project toward a downstream side thereof.

Even if a relatively low pressurized air is used, the cores 1a and the drain wires 1b can be sufficiently separated. This facilitates insertion of a tool or the like between the drain wires 1b and the cores 1a and, therefore, automatization of the processing.

## Description

The present invention relates to a method for processing an end of a shielded cable and, more particularly to a method for processing an end of a shielded cable of transverse wind type.

In general, a shielded cable is such that a plurality of cores are wound by a multitude of drain wires and the drain wires are covered with an insulating sheath. The shielded cable of transverse wind type refers to the one in which linearly extending drain wires cover the cores while being twisted in one direction along the circumferential direction of the sheath. A variety of methods and apparatuses for, e.g. peeling an end of the sheath of such a shielded cable of transverse wind type and separating the cores from the drain wires are known.

For example, Japanese Unexamined Patent Publication No. 1-177810 discloses a method according to which a sheath of a shielded cable of transverse wind type is peeled to expose drain wires, and the drain wires and cores are separated by brushing the exposed drain wires. However, according to this method, a brush needs to be brought into contact with the surfaces of the drain wires many times to properly separate the drain wires and cores. This may result in scratching the surfaces of the drain wires and/or peel plating thereon.

In view of the above problems, there have been proposed methods for processing an end of a shielded cable by separating drain wires and cores using a pressurized air so as not to scratch the surface of the drain wires. These methods are disclosed, e.g. in Japanese Unexamined Patent publications Nos. 64-81608 and 64-26316.

As described above, according to the prior art methods for processing the drain wires using the pressurized air, the drain wires and cores are separated solely by application of the pressurized air. However, the drain wires and cores cannot be sufficiently separated only by application of the pressurized air, thereby making the subsequent steps difficult. This problem is particularly eminent in the case that the end of the shielded cable to be processed is long. In order to avoid such a problem, it may be considered to set a separation force obtained by applying the pressurized air considerably large. However, this makes an apparatus for supplying the pressurized air undesirably larger, thereby increasing a cost for equipments.

In view of the above problems, an object of the invention is to provide a method for processing an end of a shielded cable according to which drain wires and cores can be easily and securely separated using a pressurized air with simple equipments, thereby ensuring an easy automatic processing.

This object is solved according to the invention by a method for processing an end of a shielded cable according to claim 1. Preferred embodiments of the invention are subject of the dependent claims.

According to the invention there is provided a method for processing an end of a shielded cable, comprising steps of:
cutting a sheath of the shielded cable,
moving a cut end of the sheath to be scrapped to expose drain wires of the shielded cable, and
applying a pressurized air to the drain wires to separate them from one or more cores of the shielded cable,
wherein the separating step is performed, while the pressurized air is applied to the drain wires, by arranging portions of the shielded cable in proximity of the exposed portion at an angle relative to each other.

According to a preferred embodiment of the invention, the method further comprises a step of loosening the braid of the exposed drain wires to expand the drain wires into a rough shape of a ball before the step of applying pressurized air, wherein in the pressurized air applying step the pressurized air is applied to the expanded drain wires, wherein the braid loosening step preferably is performed by rotating one of the portions of the shielded cable in proximity of the exposed portion, preferably the cut end of the shielded cable, around its longitudinal axis while holding the other one of the portions.

Further preferably, the arranging step comprises the step of bending the core such that the bent portion of the core substantially projects toward an upstream side of a flow of the pressurized air.

According to a further preferred embodiment, the drain wire expanding step and/or the separating step are performed while the cut end of the sheath which was cut during the drain wire exposing step is still on the core.

Preferably, the method further comprises a step of heating at least partly the cut end of the sheath while the core separated from the drain wires during the separating step is pulled out of the cut end.

Further preferably, the method further comprises a step of pulling the core out of the cut end of the sheath by holding the core separated from the drain wires during the separating step by a pair of rollers and drivingly rotating at least one of the rollers.

Still further preferably, the drain wires are twisted by rotating the cut sheath during the separating step.

According to a still further embodiment, in the arranging step the angle is different from 180°, preferably by up to about 90°, most preferably by about 90°.

According to a further preferred embodiment of the invention, there is provided a method for processing an end of a shielded cable of transverse wind type in which cores and drain wires covering the cores while being twisted in one direction along the circumferential direction of the cores are covered with a sheath, comprising steps of:
cutting the sheath,
moving the cut end of the sheath to be scrapped to expose the drain wires,
loosening the braid of the exposed drain wires to expand the drain wires into a rough shape of a ball, and
applying a pressurized air to the expanded drain wires to separate them from the cores,
wherein the separating step is performed by, while the pressurized air is applied to the drain wires, bending the cores such that the cores project toward an upstream side of a flow of the pressurized air.

Accordingly, the pressurized air is applied to the expanded drain wires, and the cores are so bent as to project toward the upstream side of the flow of the pressurized air. The pressurized air bends the drain wires so as to project toward a downstream side of the flow thereof. As a result, the cores and drain wires are bent in opposite directions, thereby being separated while defining a large space therebetween.

As described above, the drain wires are separated from the cores using the pressurized air while the cores are bent. Accordingly, the drain wires can be easily separated from the cores even if a relatively low pressurized air is used. Further, since the drain wires and the cores are separated while defining a large space therebetween, a tool or device can be easily inserted between the drain wires and the cores, thereby facilitating automatization of the processing. Thus, the drain wires and the cores can be easily and securely separated with simple equipments despite the use of the pressurized air, and such a separating step enables an easy automatic processing.

According to a further preferred embodiment, the drain wire expanding step and the separating step may be performed while the end of the sheath which was cut during the drain wire exposing step is staying on the cores.

Accordingly, the drain wire expanding step and the separating step are performed while the end of the sheath cut during the drain wire exposing step is staying on the cores. Accordingly, the respective steps can be performed while the cut end of the sheath is gripped.

Thus, since the respective steps can be performed while the scrap sheath is gripped, the processing can be easily automatized effectively using the scrap sheath.

Further preferably, the method further comprises a step of heating the end of the sheath while the cores separated from the drain wires during the separating step are pulled out of the cut end of the sheath.

Accordingly, since the cut end of sheath is heated while the cores are pulled therefrom, the inner diameter of the cut sheath increases, thereby weakening the force of the cut end of the sheath to tighten the cores.

Thus, since the force of the scrap sheath to tighten the cores is weakened, the cores can be easily pulled out of the scrap sheath.

Further preferably, the method further comprises a step of pulling the cores out of the cut end of the sheath by holding the cores separated from the drain wires during the separating step by a pair of rollers and drivingly rotating at least one of the rollers.

Accordingly, since the cores separated from the drain wires during the separating step are gripped by the pair of rollers and at least one of the rollers is drivingly rotated, the exposed cores can be smoothly pulled out of the cut end of the sheath regardless of the length of the cut sheath.

Thus, since the exposed cores can be smoothly pulled out of the scrap sheath regardless of their length, the cores can be easily processed in this respect as well.

According to a further preferred embodiment, the drain wires may be twisted by rotating the cut sheath during the separating step.

Accordingly, the drain wires can be twisted at the same time the cores are pulled out. Thus, since the cores are pulled out at the same time the drain wires are braided, the end of the shielded cable can be more rapidly processed.

These and other objects, features and advantages of the present invention will become more apparent upon a reading of the following detailed description and accompanying drawings in which:
FIG. 1 is a schematic front view showing a drain wire exposing step according to one embodiment of the invention,
FIG. 2 is a schematic front view showing a drain wire expanding step according to the embodiment,
FIGS. 3 to 6 are schematic fronts view showing a separating step according to the embodiment,
FIG. 7 is a perspective view showing a core separating step according to the embodiment,
FIG. 8 is a schematic front view showing a drain wire cutting step according to the embodiment, and
FIG. 9 is a schematic front view showing another drain wire cutting step according to the embodiment.

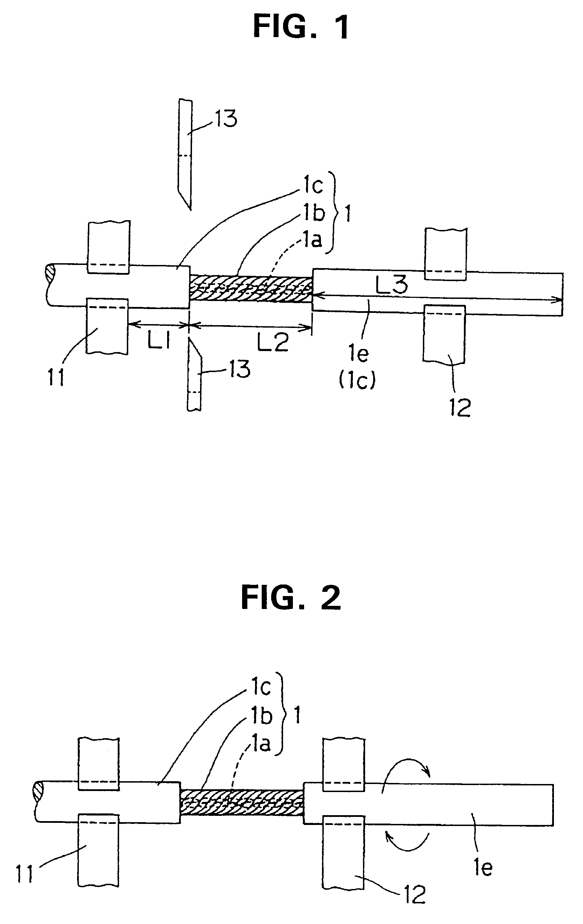

FIGS. 1 to 9 show an order of processing steps according to the embodiment.

First, with reference to FIG. 1, the processing method of this embodiment adopts a pair of clamping members 11 and 12 for gripping a shielded cable 1 of transverse wind type.

The shielded cable 1 is a known shielded cable of transverse wind type which includes two braided cores 1a, drain wires 1b covering the cores 1a, and a sheath 1c covering the drain wires 1b. The drain wires 1b are twisted in one direction around the outer surface of the cores 1a.

One clamping member 11 is a fixed clamp for gripping a base of the shielded cable 1 in a specified position after the sheath is cut at the end of the shielded cable 1 to be processed. The clamping member 11 is placed on an unillustrated work table and grips the shielded cable 1 in the specified position.

The other clamping member 12 is a movable clamp which is movable with respect to the fixed clamping member 11. Specifically, the clamping member 12 is movable in directions toward and away from the clamping member 11, rotatable or swivelling in the circumferential direction of the shielded cable 1 and in such a direction as to bend the shielded cable 1. The movable clamping member 12 may be replaced, for example, by an actuator which constitutes an automatic processing apparatus together with the fixed clamping member 11, or a hand tool such as pliers or pinchers.

In this embodiment, the base of the shielded cable 1 is gripped by the fixed clamping member 11, and the end of the shielded cable 1 is gripped by the movable clamping member 12. Then, a tension is caused to temporarily act on the shielded cable 1. In this state, a pair of V-shaped peeling blades 13 are opposed to each other in a direction substantially normal to the extension of the shielded cable 1 and moved closer to each other to cut the sheath 1c. Thereafter, the movable clamping member 12 is moved away from the fixed clamping member 11 to expose the drain wires 1b of the shielded cable 1. A peeling device as disclosed in Japanese Unexamined Patent Publication No. 64-26316 or cutters may be adopted as the peeling blades 13. As shown in FIG. 1, in this embodiment, the end sheath 1e cut during the drain wire exposing step (hereinafter, a scrap sheath) still stays at the end of the shielded cable 1. In other words, the scrap sheath 1e is not completely separated from the shielded cable 1. It should be appreciated that the sheath 1c of the shielded cable 1 may be cut before the shielded cable 1 is gripped by the clamping members 11 and 12. Let it be assumed that L1 denotes a distance between an end surface of the fixed clamping member 11 facing the peeling blades 13 and a cutting position of the sheath 1c where the cutting is applied, and that L2 denotes a distance over which the drain wires 1b are exposed from the cutting position. In this embodiment, the distances L1 and L2 are set at 10 mm and 30 mm, respectively. Further, a length L3 of the scrap sheath 1e is set between 50 and 200 mm depending upon a product to be manufactured.

Next, FIG. 2 is a schematic front view showing a drain wire expanding step according to the embodiment.

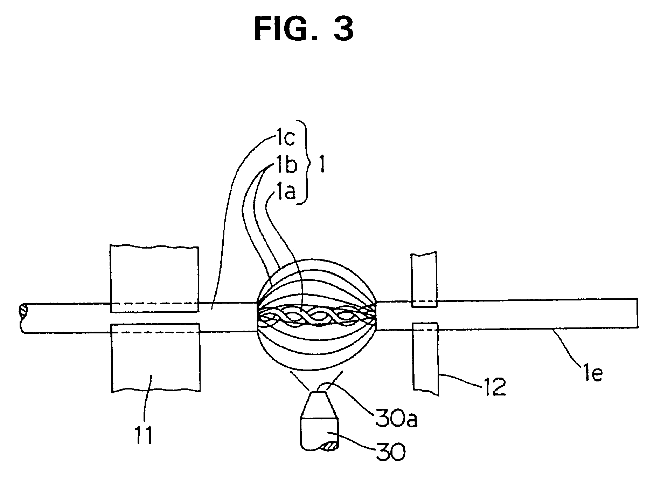

With reference to FIG. 2, according to the processing method of this embodiment, the drain wires 1b of the shielded cable 1 are loosened and expanded by rotating the movable clamping member 12 in a direction opposite to the twisted direction of the drain wires 1b, in particular a plurality of times. How many times the clamping member 12 is rotated differs depending upon the shielded cable 1, but it is generally sufficient to rotate the clamping member 12 a few times. As a result of the expanding step, the drain wires 1b expand and are bent outwards into a rough shape of a ball as shown in FIG. 3.

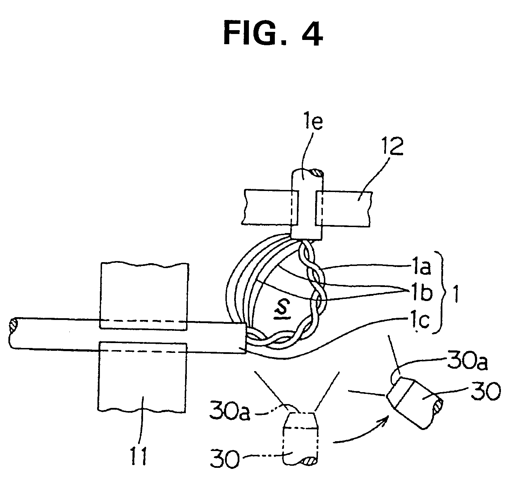

With reference to FIG. 3, the expanded drain wires 1b are separated from the cores 1a by applying a pressurized air during the separating step. In this embodiment, an air nozzle 30 is adopted to apply the pressurized air to the substantially middle of the expanded drain wires 1b. In the case that the separating step is manually performed, an air gun may be adopted for this purpose. The separating step is performed by, while the pressurized air is applied, bending the cores 1a so as to project toward an upstream side of a low of the pressurized air, i.e. toward an air discharging port 30a of the air nozzle 30 as shown in FIG. 4. The cores 1a can be easily bent by, e.g. moving the movable clamping member 12 such that the scrap sheath 1e forms an angle θ different from 180°, in particular of about 90° with respect to the sheath 1c. By moving the movable clamping member 12 as above, the cores 1a having a relatively high rigidity are bent, projecting toward the air discharging port 30a of the air nozzle 30. On the other hand, having a considerably lower rigidity than the cores 1a, the drain wires 1b are bent by the pressurized air blown from the nozzle 30 so as to project in a direction opposite from the projecting direction of the cores 1a, i.e. toward a downstream side of the flow of the pressurized air. As a result, the cores 1a and the drain wires 1b are bent in opposite directions, thereby being separated while defining a large space S therebetween. In this embodiment, the air nozzle 30 is displaceably held by an unillustrated gripping mechanism. While the cores 1a are bent, the air nozzle 30 are rotated from a position indicated by phantom line to a position indicated by solid line so that the air discharging port 30a is constantly directed to the approximately middle of the exposed drain wires 1b.

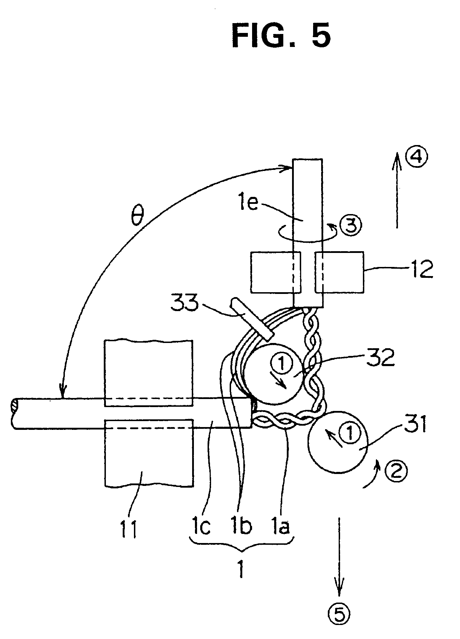

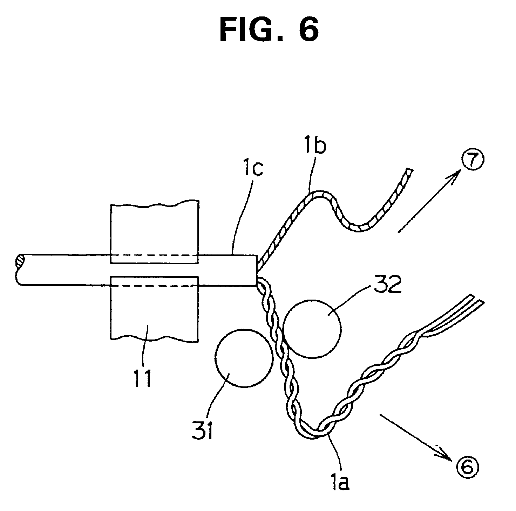

Next, FIGS. 5 and 6 are schematic front views showing a step of pulling the cores 1a out of the scrap sheath 1e.

With reference to FIG. 5, a pair of rollers 31, 32 are used in the pulling step. One roller 31 is a drive roller which is drivingly rotated by an unillustrated driving source, whereas the other roller 32 is a driven roller which transmits a driving force of the drive roller 31 to the cores 1a by holding the cores 1a in cooperation with the drive roller 31. Tapered member of resin are adopted as the rollers 31, 32.

For example, after the driven roller 32 is inserted into the space S defined between the cores 1a and the drain wires 1b, the driven roller 32 and the drive roller 31 are moved closer to each other as indicated by arrows (1), thereby tightly holding the cores 1a therebetween. Then, by rotating the drive roller 31 counterclockwise as indicated by an arrow (2) in FIG. 5, the cores 1a can be easily pulled out of the scrap sheath 1e as shown in FIG. 6. In this embodiment, by rotating the movable clamping member 12 in one direction indicated by an arrow (3) and moving it in a direction indicated by an arrow (4), the drain wires 1b are braided at the same time the as they are pulled out.

Thereafter, in this embodiment, the rollers 31, 32 are integrally moved away from the scrap sheath 1e as indicated by an arrow (5) during the rotation of the drive roller 31 while the scrap sheath 1e is heated by blowing a hot air thereto, thereby pulling the cores 1a out of the scrap sheath 1e. Upon being heated, the inner diameter of the scrap sheath increases, thereby weakening a force of the scrap sheath 1a to tighten the cores 1a.

After being pulled out of the scrap 1e, the cores 1a are pulled in a direction indicated by an arrow (6) using the rollers 31, 32, and the drain wires 1b are pulled in a direction indicated by an arrow (7) using an unillustrated tool. As a result, the cores 1a and the drain wires 1b are straightened while being separated from each other.

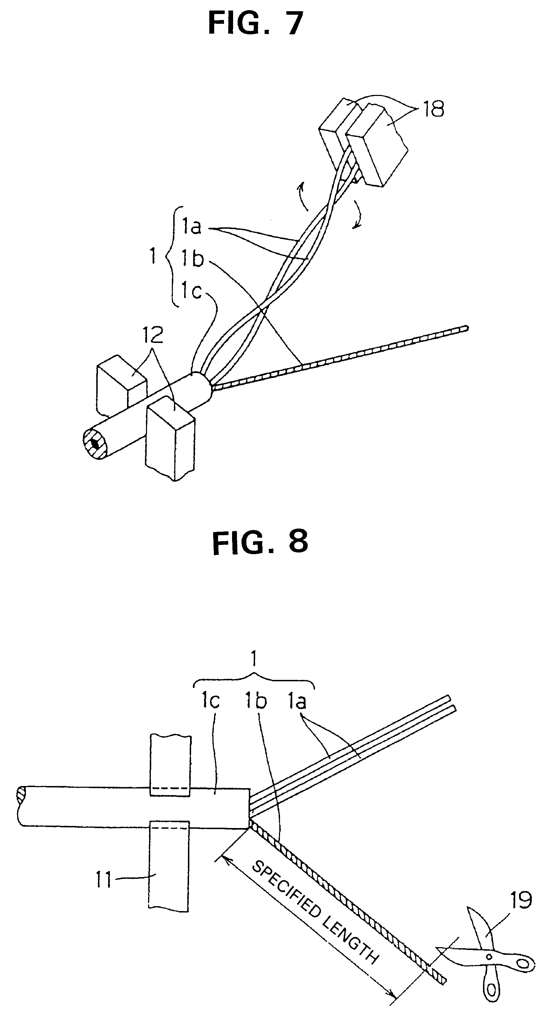

With reference to FIG. 7, the separated two cores 1a are loosened and separated by being twisted in a direction opposite from the one in which they are twisted. In this embodiment, the respective cores 1a are loosened and separated while the ends thereof are gripped by a movable clamping member 18. Alternatively, the movable clamping member 12 may be used to grip the ends of the cores 1a as shown in FIG. 7 so as to loosen them.

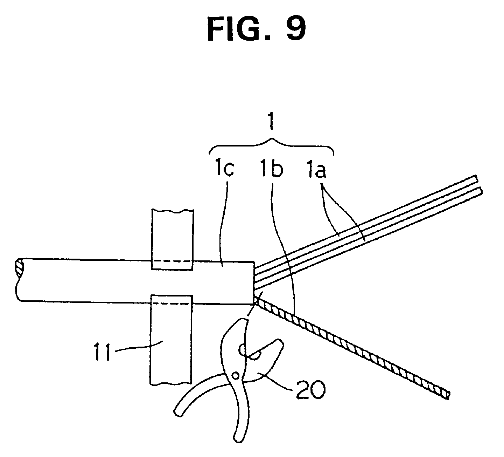

With reference to FIGS. 8 and 9, the braided drain wires 1b are cut in a desired measured length according to its use (see FIG. 8) or cut at the end of the sheath 1c (see FIG. 9). Consequently, processing of the end of the shielded cable 1 is completed.

As a means for cutting the drain wires 1b, scissors 19 for cutting metal wires as shown in FIG. 8 or pliers 20 as shown in FIG. 9 may be used.

As described above, according to the method of this embodiment, the drain wires 1b are separated from the cores 1a by applying the pressurized air while the cores 1a are bent. Accordingly, the drain wires 1b can be easily separated from the cores 1a even if a relatively low pressurized air is used. Further, since the drain wires 1b and the cores 1a are separated while defining the large space S therebetween, the rollers 31, 32 as illustrated in the foregoing embodiment or like tool or device can be easily inserted between the drain wires 1a and the cores 1a, thereby ensuring an easy automatic processing.

Thus, the foregoing embodiment has remarkable effects: the drain wires 1b and the cores 1a can be easily and securely separated with simple equipments despite the use of the pressurized air, and such a separating step enables an easy automatic processing.

Further, since the respective steps can be performed while the scrap sheath 1e is gripped, the processing can be easily automatized effectively using the scrap sheath 1e.

Since the pulling step is performed by heating the scrap sheath 1e as described above, the force of the scrap sheath 1e to tighten the cores 1a is weakened. As a result, the cores 1a can be easily pulled out of the scrap sheath 1e.

Further, by using the rollers 31, 32, the exposed cores 1a can be smoothly pulled out of the scrap sheath 1e regardless of their length. In this respect as well, the cores 1a can be easily processed.

Since the cores 1a are pulled out at the same time the drain wires 1b are braided in this embodiment, the end of the shielded cable 1 can be more rapidly processed.

The foregoing embodiment is nothing but an illustration of a preferred embodiment of the invention, and the invention is not limited thereto. For example, although at least one of the rollers 31, 32 described in the foregoing embodiment is a drive roller, both rollers may be driver rollers. It should be also appreciated that a variety of design changes are possible without departing from the spirit and scope of the invention as defined in the claims.

### LIST OF REFERENCE NUMERALS

- 1: Shielded Cable
- 1a: Core
- 1b: Drain Wire
- 1c: Sheath
- 1e: Scrap Sheath (Cut End of the Sheath)
- 30: Air Nozzle
- 31: Drive Roller
- 32: Driven Roller

## Claims

1. A method for processing an end of a shielded cable (1) , comprising steps of:
cutting a sheath (1c) of the shielded cable (1),
moving a cut end (1e) of the sheath (1c) to be scrapped to expose drain wires (1b) of the shielded cable (1),
and
applying a pressurized air to the drain wires (1b) to separate them from one or more cores (1a) of the shielded cable (1),
wherein the separating step is performed, while the pressurized air is applied to the drain wires (1b), by arranging portions (1c, 1e) of the shielded cable (1) in proximity of the exposed portion at an angle (θ) relative to each other.

2. A method according to claim 1, further comprising a step of loosening the braid of the exposed drain wires (1b) to expand the drain wires (1b) into a rough shape of a ball before the step of applying pressurized air, wherein in the pressurized air applying step the pressurized air is applied to the expanded drain wires (1b).

3. A method according to claim 2, wherein the braid loosening step is performed by rotating one of the portions (1c, 1e) of the shielded cable (1) in proximity of the exposed portion, preferably the cut end (1e) of the shielded cable (1), around its longitudinal axis while holding the other one of the portions (1c, 1e).

4. A method according to one or more of the preceding claims, wherein the arranging step comprises the step of bending the core (1a) such that the bent portion of the core (1a) substantially projects toward an upstream side of a flow of the pressurized air.

5. A method according to one or more of the preceding claims and claim 2, wherein the drain wire expanding step and/or the separating step are performed while the cut end of the sheath (1e) which was cut during the drain wire exposing step is still on the core (1a).

6. A method according to one or more of the preceding claims, further comprising a step of heating at least partly the cut end of the sheath (1e) while the core (1a) separated from the drain wires (1b) during the separating step is pulled out of the cut end (1e).

7. A method according to one or more of the preceding claims, further comprising a step of pulling the core (1a) out of the cut end (1e) of the sheath (1c) by holding the core (1a) separated from the drain wires (1b) during the separating step by a pair of rollers (31, 32)and drivingly rotating at least one (31) of the rollers (31, 32).

8. A method according to one or more of the preceding claims, wherein the drain wires (1b) are twisted by rotating the cut sheath (1e) during the separating step.

9. A method according to one or more of the preceding claims, wherein in the arranging step the angle (θ) is different from 180°, preferably by up to about 90°, most preferably by about 90°.
